# EUROPEAN PATENT SPECIFICATION

(11) **EP 4 037 078 B1**
(45) Date of publication and mention of the grant of the patent: **16.04.2025**
(21) Application number: 21846398.2
(22) Date of filing: 30.04.2021
(51) Int. Cl.: H01M 50/209, H01M 50/242, H01M 10/04

(54) **BATTERY MODULE COMPRISING CONSTANT-FORCE SPRING, AND BATTERY PACK COMPRISING SAME**
BATTERIEMODUL MIT KONSTANTKRAFTFEDER UND AKKUPACK DAMIT
MODULE DE BATTERIE COMPRENANT UN RESSORT À FORCE CONSTANTE ET BLOC-BATTERIE LE COMPRENANT

(30) Priority: 20.07.2020 KR 20200089333
(43) Date of publication of application: 03.08.2022
(73) Proprietor: LG Energy Solution, Ltd., Seoul 07335 (KR)
(72) Inventor: KIM, Dong Wook, Daejeon 34122 (KR)
(74) Representative: Plasseraud IP
(86) International application number: PCT/KR2021/005514
(87) International publication number: WO 2022/019445

(56) References cited:
- JP-A- 2010 040 295
- JP-A- 2018 206 605
- KR-A- 20160 050 843
- KR-A- 20180 107 197
- KR-A- 20190 031 831
- US-A1- 2018 151 856
- US-B2- 9 634 295

## Description

### [Technical Field]

The present invention relates to a battery module including a constant force spring and a battery pack including the same.

This application claims the benefit of priority based on Korean Patent Application No. 10-2020-0089333, filed on July 20, 2020.

### [Background Art]

In recent years, as the price of energy sources increases due to the depletion of fossil fuels and the interest of environmental pollution is amplified, the demand for environmentally friendly alternative energy sources has become an indispensable factor for future life. As such, various researches on power generation technologies such as nuclear power, solar power, wind power, and tidal power have been continued, and electric power storage devices for more efficient use of such generated energy have also been attracting much attention.

In particular, with the development of technology and demand for mobile devices, the demand for batteries as energy sources is rapidly increasing, and accordingly, a lot of researches on batteries capable of meeting various demands have been conducted.

Typically, in terms of the shape of the battery, there is a high demand for a prismatic secondary battery and a pouch-type secondary battery that can be applied to products such as mobile phones with a small thickness. In terms of materials, there is a high demand for lithium secondary batteries such as lithium ion batteries and lithium ion polymer batteries having advantages such as high energy density, discharge voltage, and output stability.

Such a secondary battery is formed in a structure such that an electrode assembly including a positive electrode, a negative electrode, and a separator disposed therebetween is built in a battery case, and positive and negative electrode tabs are welded to two electrode leads and are sealed to be exposed to the outside of the battery case. The electrode tab is electrically connected to the external device through contact with the external device, and the secondary battery supplies power to the external device through the electrode tab or receives power from the external device.

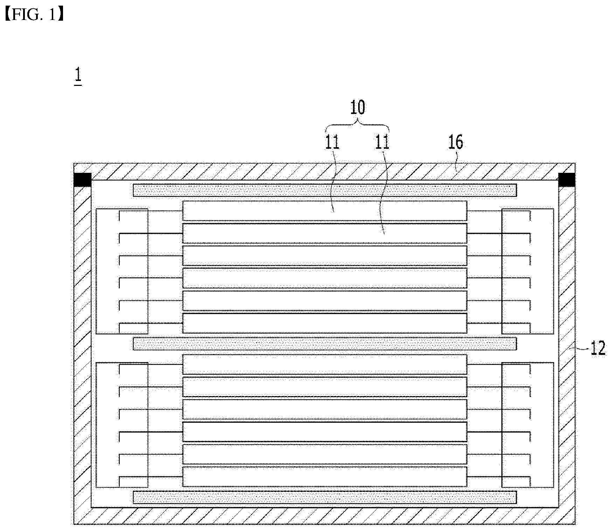

FIG. 1 is a cross-sectional view of a conventional battery module. As shown in FIG. 1, the conventional battery module includes a battery cell stack inside a case. Meanwhile, gas may be generated inside the battery cells in the charge/discharge process, and a swelling phenomenon, in which the battery cells are expanded or shrunk, may repeatedly occur due to the generated gas. In particular, there was a problem that as the thickness of the battery cells increased by the repetition of charge/discharge of the battery cells, the case of the battery module was deformed.

As such, there is a need for a technology for preventing the deformation of the case by maintaining the swelling force according to the charge/discharge of the battery cells constant.

Further prior art is described in US 2011/0177377 A1.

### [Disclosure]

### [Technical Problem]

The present disclosure has been devised to solve the problems of the prior art, and an object of the present disclosure is to provide a battery module including a constant force spring and a battery pack including the same.

### [Technical Solution]

The present disclosure provides a battery module including a constant force spring. In one embodiment, a battery module according to the present disclosure includes: a battery cell stack comprising n battery cells; a case having one open end and accommodating the battery cell stack inside thereof; an upper plate stacked on an upper end of the battery cell stack; and a constant force spring configured to be positioned inside the case, wherein n is an integer equal to or greater than 2. The battery cell stack is accommodated in the case such that the laminated surfaces of the battery cell stack are parallel to the bottom surface of the case. At this time, the constant force spring includes a winding end and a free end, and the winding end is fixed at a lower portion of the case, and the free end is fixed at the upper plate. The battery module according to the present disclosure includes a case cover configured to cover the one open end of the case, wherein one or more stopper blocks are provided between the cover and the upper plate, so as to limit movement of the upper plate in an upward direction.

In one example, a plurality of constant force springs are located at two or more spots which are symmetrical to each other with respect to a stacking direction.

In further another embodiment, a compression pad is formed at each of the upper end and the lower end of the battery cell stack. Further, m (m is an integer equal to or greater than 2) battery cell stacks are provided, and a compression pad is interposed between respective battery cell stacks.

Further, the battery cell stack further includes a bus bar assembly electrically connecting the n battery cells.

In one embodiment, the case further includes a holder or a spring mounting portion for fixing a region where the constant force spring is wound in a spring form.

At this time, the free end of the constant force spring has a fixing hole formed thereon, and

A fixing pin, which penetrates the fixing hole, may be formed at a side surface of the upper plate.

Further, the present disclosure provides a battery pack including the above-described battery module.

### [Advantageous Effects]

According to a battery module including a constant force spring, and a battery pack including the same of the present disclosure, by including a constant force spring, even if a swelling phenomenon occurs in battery cells accommodated in a battery module, the surface pressure of the battery cells can be maintained constant.

### [Brief Description of the Drawings]

FIG. 1 is a cross-sectional view of a conventional battery module.
FIG. 2 is a schematic diagram showing a battery module according to one embodiment of the present disclosure.
FIG. 3 is a side view of a battery module according to one embodiment of the present disclosure.
FIG. 4 is a schematic diagram showing a battery module according to another embodiment of the present disclosure.

### [Detailed Description of the Preferred Embodiments]

Hereinafter, the present disclosure will be described in detail with reference to the drawings. The terms and words used in the present specification and claims should not be construed as limited to ordinary or dictionary terms and the inventor may properly define the concept of the terms in order to best describe its disclosure. The terms and words should be construed as meaning and concept consistent with the technical idea of the present disclosure.

The present disclosure relates to a battery module, and more particularly, to a battery module including a constant force spring. **In** one embodiment, the battery module includes: a battery cell stack comprising n (n is an integer equal to or greater than 2) battery cells; a case having one open end and accommodating the battery cell stack inside thereof; an upper plate stacked on an upper end of the battery cell stack; and a constant force spring configured to be positioned inside the case and be fixed on a lower portion of the case, wherein the constant force spring includes a winding end and a free end, and wherein the winding end is fixed at a lower portion of the case, and the free end is fixed at the upper plate.

Generally, gas may be generated inside the battery cells in the charge/discharge process, and as such, a swelling phenomenon, in which the battery cells are expanded or shrunk, may repeatedly occur. In particular, there was a problem that as the thickness of the battery cell increased by the repetition of charge/discharge of the battery cell, the case of the battery module was deformed. As such, the present disclosure provides a battery module including a constant force spring and a battery pack including the same. More specifically, the present disclosure provides a battery module capable of allowing an expansion displacement by a swelling phenomenon while compressing n battery cells, which are accommodated in a battery module, with a constant force using the constant force spring.

In the present disclosure, the constant force spring is a spring which is wound in a spring type, and means a spring which is wound in a direction, in which a spring type spring pulls with tension, and is formed to be restored to its original state by elastic force when elastic force is released. Unlike a general spring, the load of the constant force spring does not linearly increase as the displacement increases, and the load of the constant force spring may be maintained constant even when the displacement increases at a certain load. Namely, in the battery module of the present disclosure, the constant force spring presses the battery cells accommodated in the case by a constant load. Even if a battery cell swelling phenomenon occurs in the battery cells, the surface pressure of the battery cells may be maintained constant.

Through various and repeated experiments observations, the inventors of the present disclosure have found that by fastening the battery cell stack with the constant force spring, the surface pressure of the battery cells is maintained constant even when a swelling phenomenon occurs in the battery cells.

In one embodiment, the constant force spring is a spring which is wound in a spring form, and includes a winding end and a free end. Herein, the winding end means a region which has been wound in a constant force spring, and the free end means an opposite region of the winding end. In a specific example, the winding end of the constant force spring is fixed at the lower portion of the case, and the free end is fixed at the upper plate. Meanwhile, a holder or mounting portion for fixing a wound region of the constant force spring may be included in the lower portion of the case. For example, the winding end has a spring form having an empty space in the center, and the holder or mounting portion may fix the constant force spring by penetrating the central portion of the winding end.

Further, the free end of the constant force spring has a fixing hole, and a fixing pin, which penetrates the fixing hole, is formed at the side surface of the upper plate. Namely, the fixing hole of the free end may be coupled with and fixed at the fixing pin of the upper plate.

The free end of such a constant force spring is fixed at the upper plate in a state that is mounted on the mounting portion or the holder in the case. As such, the constant force spring applies elastic force to pull the battery cell stack in the case toward the lower end of the case, thereby pressing the battery cells by a designed load.

Meanwhile, a plurality of constant force springs may be located at two or more spots which are symmetrical to each other with respect to a stacking surface of the battery cell stack. In a specific example, the constant force springs may be located at both sides of the battery cell stack where the electrode leads are not formed. If the constant force springs are not located at spots which are symmetrical to each other with respect to a stacking surface of the battery cell stack, when a swelling phenomenon of the battery cell occurs, problems such as case deformation may occur due to the tilt of the battery cell stack in one direction. For example, the constant force springs are located at both sides of the battery cell stack, and two or more constant force springs may be located at each side.

In one example, the battery cell stack has a structure in which n (n is an integer equal to or greater than 2) battery cells are laminated. The number (n) of laminated battery cells may be changed depending on the number of battery cells which need electric connection or depending on the capacity of the battery module. For example, the number (n) of laminated battery cells of the battery cell stack is in a range of 2 to 100, 2 to 50, 2 to 10, or 3 to 7.

On the other hand, if the battery cell is a secondary battery capable of charging and discharging, it is not particularly limited. In a specific example, each battery cell constituting the battery cell stack is a pouch type unit cell, and an electrode assembly of a positive electrode/separator/negative electrode structure is built in a laminate sheet exterior material in a manner that is connected to electrode leads formed outside the exterior material. The electrode leads may be drawn to the outside of the sheet and may be extended in the same or opposite direction to each other.

Further, the battery cell stack further includes a bus bar assembly which electrically connects the n battery cells. In one example, the bus bar assembly includes a bus bar or an insulating bar, and respective battery cells are electrically connected by such bars. Meanwhile, the battery cell stack may electrically connect battery cells in series or in parallel according to the positions where the bus bar and the insulating bar are disposed in the bus bar assembly. The bus bar assembly may be a conventional bus bar assembly.

In one embodiment, the battery module according to the present disclosure includes a case having a structure in which one side is opened. The case means a housing for accommodating a battery cell stack, and an accommodation space for accommodating a battery cell stack is included in the case. Meanwhile, when the battery cell stack is accommodated in a case, the battery cell stack is accommodated such that the laminated surface of the battery cell stack may be parallel to the bottom surface of the case.

Further, the battery module according to the present disclosure further includes a case cover which is coupled with one surface of the case and covers one surface of the case. For example, the case may be a conventional U-case used as a battery module, and the case cover may be welded with the U-case.

The battery module according to the present disclosure includes an upper plate. The upper plate is laminated on the upper portion of the battery cell stack and may limit the movement at the upper portion of the battery cell stack by fastening a constant force spring. The upper plate may be plate-shaped and may be made of an electrically insulating material.

In one embodiment, the battery module according to the present disclosure has spaces at regular intervals between the upper plate and the cover. In a specific example, when the swelling phenomenon of the battery cells occurs by more than a designed load limit, the upper plate moves in an upward direction as the wound region of the constant force spring is unwound.

At this time, if there is no space between the upper plate and the cover, the case may be deformed by upward movement of the upper plate. Hence, the space between the upper plate and the cover is necessary to prevent the case deformation.

The battery module according to the present disclosure includes one or more stopper blocks between the case cover and the upper plate. The stopper block limits the movement in the upward direction of the upper plate and is attached on the inner side of the case cover or the upper portion of the upper plate.

The stopper block limits the movement in the upward direction of the upper plate and is attached on the inner side of the case cover or the upper portion of the upper plate.

In a specific example, when the swelling phenomenon of the battery cells occurs by more than a designed load limit, the upper plate moves in an upward direction as the wound region of the constant force spring is unwound. Meanwhile, there is a predetermined space between the case cover and the upper plate. If the swelling displacement of the battery cell goes beyond the predetermined space, the movement in the upward direction of the upper plate may be limited by the stopper block. The stopper block may be made of any material if it is a material for limiting the movement of the upper plate. For example, it may be an insulating plastic.

In further another embodiment, the upper plate includes a protrusion ( 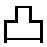 ) of a predetermined height in an upward direction. In a specific example, the protrusion may be included in both ends of the upper plate, and a stopper block may be attached to the cover. At this time, the stopper block may be located to contact the inner surface of the protrusion. Namely, the protrusion is used to limit the movement of the upper plate in a horizontal direction.

In one embodiment, the battery module according to the present disclosure includes a compression pad. In a specific example, a compression pad may be formed at each of the upper end and the lower end of battery cell stacks of the battery module according to the present disclosure.

In another embodiment, m (m is an integer equal to or greater than 2) battery cell stacks are provided in the battery module according to the present disclosure, and a compression pad may be interposed between respective battery cell stacks. The compression pad may be made of a polyurethane series material, and when thickness is modified by the swelling phenomenon of the battery cell, the change in the battery cell by the external impact may be absorbed.

Further, the present disclosure provides a battery pack including a battery module described above.

In a specific example, the present disclosure provides a battery pack generated by combining one or two or more battery modules.

The battery pack is applicable to various types of energy storage devices and power sources. For example, the energy storage device is an Energy Storage System (ESS) that stores a large amount of electrical energy. In addition, the power source is applicable to the power source of a moving means such as a vehicle. The vehicle refers to any type of vehicle which uses secondary batteries as its auxiliary power source or main power source. Specifically, the vehicle includes a hybrid (HEV), a plug-in hybrid (PHEV), or a pure electric car (BEV, EV), and the like.

### [Detailed Description of the Preferred Embodiments]

Hereinafter, the present disclosure will be described in more detail through drawings and examples. As the inventive concept allows for various changes and numerous embodiments, particular embodiments will be illustrated in the drawings and described in detail in the text. However, this is not intended to limit the present disclosure to the specific form disclosed, and it should be understood to include all changes, equivalents, and substitutes included in the spirit and scope of the present disclosure.

### (First embodiment)

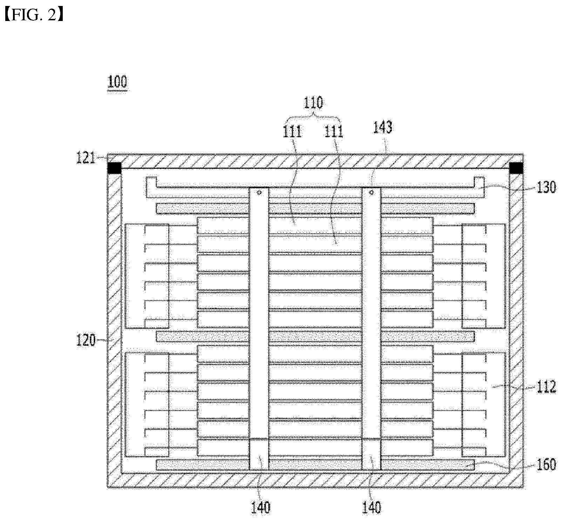

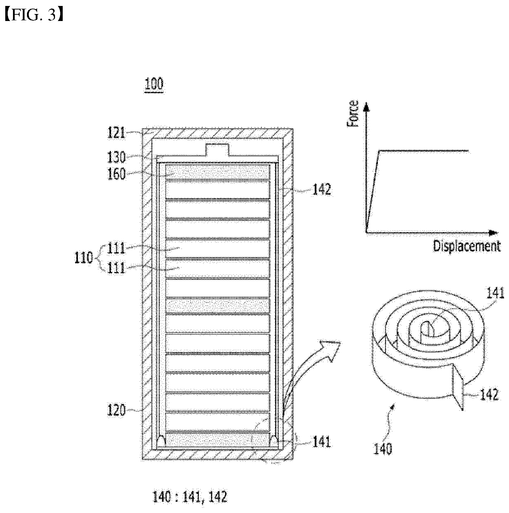

FIG. 2 is a schematic diagram showing a battery module according to one exemplary embodiment of the present disclosure, and FIG. 3 is a side view of a battery module according to the one exemplary embodiment of the present disclosure. Referring to FIGS. 2 and 3, a battery module 100 according to the present disclosure includes: a battery cell stack 110 comprising n (n is an integer equal to or greater than 2) battery cells 111; a case 120 having one open end and accommodating the battery cell stack 110 inside thereof; an upper plate 130 laminated on an upper end of the battery cell stack 110; and a constant force spring 140 configured to be positioned inside the case 120 and be fixed on a lower portion of the case 120.

Further, the battery module 100 according to one example of the present disclosure has a structure in which a compression pad 160 is formed at each of the upper end and the lower end of the battery cell stack 110 of the battery module, and the compression pad 160 is interposed between respective battery cell stacks. Further, the battery module 100 includes a case cover 121 configured to cover the one open end of the case 120.

Meanwhile, a plurality of constant force springs 140 are located at two or more spots which are symmetrical to each other with respect to a stacking direction. Specifically, the constant force springs 140 may be located at both sides of the battery cell stack 110 where the electrode leads are not formed.

Further, the constant force spring 140 is a spring which is wound in a spring form and includes a winding end 141 and a free end 142. Herein, the winding end 141 means a region which is wound in a constant force spring, and the free end 142 means an opposite region of the winding end 141.

Specifically, winding end 141 of the constant force spring 140 is fixed at the lower portion of the case 120, and the free end 142 is fixed at the upper plate 130. Meanwhile, a holder or mounting portion for fixing a wound region of the constant force spring 140 may be included in the lower portion of the case 120. For example, the winding end 141 has a spring form having an empty space in the center, and the holder or mounting portion may fix the constant force spring 140 by penetrating the central portion of the winding end 141.

Further, the free end 142 of the constant force spring 140 has a fixing hole 143 formed thereon, and a fixing pin (not shown), which penetrates the fixing hole 143, is formed at the side surface of the upper plate 130. Namely, the fixing hole 143 of the free end 142 may be coupled with and fixed at the fixing pin of the upper plate 130.

The free end 142 of such a constant force spring 140 is fixed at the upper plate 130 in a state that is mounted on the mounting portion or the holder in the case 120. As such, the constant force spring 140 applies elastic force to pull the battery cell stack 110 in the case toward the lower end of the case 120, thereby pressing the battery cells 111 by a designed load.

### (Second embodiment)

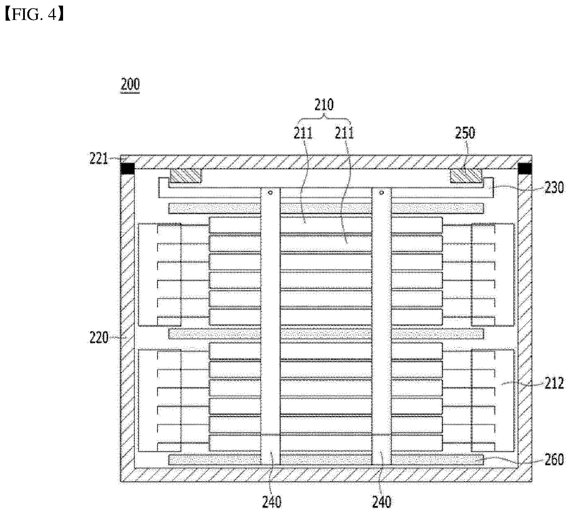

FIG. 4 is a schematic diagram showing a battery module according to another exemplary embodiment of the present disclosure.

Referring to FIG. 4, a battery module 200 according to the present disclosure includes: a battery cell stack 210 comprising n (n is an integer equal to or greater than 2) battery cells 211; a case 220 having one open end and accommodating the battery cell stack 210 inside thereof; an upper plate 230 laminated on an upper end of the battery cell stack 210; and a constant force spring 240 configured to be positioned inside the case 220 and be fixed on a lower portion of the case 220.

Further, the battery module 200 according to one example of the present disclosure has a structure in which a compression pad 260 is formed at each of the upper end and the lower end of the battery cell stack 210 of the battery module, and the compression pad 260 is interposed between respective battery cell stacks. Further, the battery module 200 includes a case cover 221 configured to cover the one open end of the case 220.

Further, the battery module 200 according to the present disclosure includes one or more stopper blocks 250 between the case cover 221 and the upper plate 230. In FIG. 4, it is shown that two stopper blocks 250 are provided, but the present disclosure is not limited thereto.

The stopper block 250 is configured to limit the movement in the upward direction of the upper plate 230 and is attached to the inner side of the case cover 221 and the upper portion of the upper plate 230.

Specifically, a swelling phenomenon of the battery cell 211 in the battery module 200 occurs by more than a designed load, the upper plate 230 moves in the upward direction as the wound region of the constant force spring is unwound. Meanwhile, there is a predetermined space between the case cover 221 and the upper plate 230. If the swelling displacement of the battery cell goes beyond the predetermined space, the movement in the upward direction of the upper plate 230 may be limited by the stopper block 250.

Although preferred examples of the present disclosure have been described with reference to drawings, it can be understood that those skilled in the art can make various modifications and changes to the present disclosure without departing from the scope of the disclosure as set forth in the claims below.

Therefore, the technical scope of the present disclosure should not be limited to the contents described in the detailed description of the specification but should be defined by the claims.

### [Description of reference numerals]

1, 100: battery module
10, 110, 210: battery cell stack
11, 111, 211: battery cell
112, 212: bus bar assembly
12, 120, 220: case
16, 121, 221: cover
130, 230: upper plate
140, 240: constant force spring
141: winding end
142: free end
143: fixing hole
250: stopper block
160, 260: compression Pad

## Claims

1. A battery module (100) comprising:
a battery cell stack (110) comprising n battery cells (111);
a case (120) having one open end and accommodating the battery cell stack (110) inside thereof;
an upper plate (130) stacked on an upper end of the battery cell stack (110); and
a constant force spring (140) positioned inside the case (120),
wherein the constant force spring (140) includes a winding end (141) and a free end (142),
**characterized in that** the battery cell stack (110) is accommodated in the case (120) such that the laminated surfaces of the battery cell stack (110) are parallel to the bottom surface of the case,
the winding end (141) is fixed at a lower portion of the case (120), and the free end (142) is fixed at the upper plate (130),
wherein n is an integer equal to or greater than 2,
wherein the battery module (100) further comprises a case cover (121) covering the one open end of the case (120), and
wherein one or more stopper blocks (250) are provided between the case cover (221) and the upper plate (230) so as to limit movement of the upper plate (230) in an upward direction.

2. The battery module (100) of claim 1, wherein a plurality of constant force springs (140) are located at two or more spots which are symmetrical to each other with respect to a stacking direction of the battery cell stack (110).

3. The battery module (200) of claim 1, wherein a compression pad (260) is formed at each of a lower end and an upper end of the battery cell stack (210).

4. The battery module (100) of claim 1, wherein m battery cell stacks (110) are provided,
wherein m is an integer equal to or greater than 2, and
wherein a compression pad (160) is formed between respective battery cell stacks (110).

5. The battery module (100) of claim 1, wherein the battery cell stack (110) further includes a bus bar assembly (112) electrically connecting the n battery cells (111).

6. The battery module (100) of claim 1, wherein the case (120) further includes a holder or a spring mounting portion for fixing a region where the constant force spring (140) is wound in a spring form.

7. The battery module (100) of claim 1, wherein the free end (142) of the constant force spring (140) comprises a fixing hole (143) formed thereon, and
wherein a fixing pin, which penetrates the fixing hole (143), is formed at a side surface of the upper plate (130).

8. A battery pack comprising the battery module (100) according to at least one of claims 1 to 7.

## Patentansprüche

1. Batteriemodul (100), umfassend:
einen Batteriezellenstapel (110), welcher n Batteriezellen (111) umfasst;
ein Gehäuse (120), welches ein offenes Ende aufweist und welches den Batteriezellenstapel (110) innerhalb davon aufnimmt;
eine obere Platte (130), welche auf ein oberes Ende des Batteriezellenstapels (110) gestapelt ist; und
eine Feder (140) mit konstanter Kraft, welche innerhalb des Gehäuses (120) positioniert ist,
wobei die Feder (140) mit konstanter Kraft ein Windungsende (141) und ein freies Ende (142) umfasst,
**dadurch gekennzeichnet, dass** der Batteriezellenstapel (110) derart in dem Gehäuse (120) aufgenommen ist, dass die laminierten Flächen des Batteriezellenstapels (110) parallel zu der unteren Fläche des Gehäuses sind,
das Windungsende (141) an einem unteren Abschnitt des Gehäuses (120) befestigt ist und das freie Ende (142) an der oberen Platte (130) befestigt ist,
wobei n eine ganze Zahl ist, welche gleich wie oder größer als 2 ist,
wobei das Batteriemodul (100) ferner eine Gehäuseabdeckung (121) umfasst, welche das eine offene Ende des Gehäuses (120) abdeckt, und
wobei ein oder mehrere Anschlagblöcke (250) zwischen der Gehäuseabdeckung (221) und der oberen Platte (230) bereitgestellt sind, um eine Bewegung der oberen Platte (230) in einer Aufwärtsrichtung zu begrenzen.

2. Batteriemodul (100) nach Anspruch 1, wobei eine Mehrzahl von Federn (140) mit konstanter Kraft an zwei oder mehr Stellen angeordnet ist, welche in Bezug auf eine Stapelrichtung des Batteriezellenstapels (110) symmetrisch zueinander sind.

3. Batteriemodul (200) nach Anspruch 1, wobei ein Kompressionskissen (260) an sowohl einem unteren Ende als auch einem oberen Ende des Batteriezellenstapels (210) gebildet ist.

4. Batteriemodul (100) nach Anspruch 1, wobei m Batteriezellenstapel (110) bereitgestellt sind,
wobei m eine ganze Zahl ist, welche gleich wie oder größer als 2 ist, und
wobei ein Kompressionskissen (160) zwischen jeweiligen Batteriezellenstapeln (110) gebildet ist.

5. Batteriemodul (100) nach Anspruch 1, wobei der Batteriezellenstapel (110) ferner eine Sammelschienenanordnung (112) umfasst, welche die n Batteriezellen (111) elektrisch verbindet.

6. Batteriemodul (100) nach Anspruch 1, wobei das Gehäuse (120) ferner eine Halteeinrichtung oder einen Federmontageabschnitt zum Befestigen eines Bereichs umfasst, in welchem die Feder (140) mit konstanter Kraft in einer Federform gewickelt ist.

7. Batteriemodul (100) nach Anspruch 1, wobei das freie Ende (142) der Feder (140) mit konstanter Kraft ein Befestigungsloch (143) umfasst, welches daran gebildet ist, und
wobei ein Befestigungsstift, welcher das Befestigungsloch (143) durchdringt, an einer Seitenfläche der oberen Platte (130) gebildet ist.

8. Batteriepack, umfassend das Batteriemodul (100) nach wenigstens einem der Ansprüche 1 bis 7.

## Revendications

1. Module de batterie (100) comprenant :
un empilement de cellules de batterie (110) comprenant n cellules de batterie (111) ; un boîtier (120) ayant une extrémité ouverte et accueillant l'empilement de cellules de batterie (110) à l'intérieur de celui-ci ;
5 une plaque supérieure (130) empilée sur une extrémité supérieure de l'empilement de cellules de batterie (110) ; et
un ressort à force constante (140) positionné à l'intérieur du boîtier (120),
dans lequel le ressort à force constante (140) comporte une extrémité d'enroulement (141) et une extrémité libre (142),
10 **caractérisé en ce que** l'empilement de cellules de batterie (110) est logé dans le boîtier (120) de telle sorte que les surfaces stratifiées de l'empilement de cellules de batterie (110) sont parallèles à la surface inférieure du boîtier,
l'extrémité d'enroulement (141) est fixée à une partie inférieure du boîtier (120), et l'extrémité libre (142) est fixée à la plaque supérieure (130),
15 dans lequel n est un nombre entier supérieur ou égal à 2,
dans lequel le module de batterie (100) comprend en outre un couvercle de boîtier (121) recouvrant l'une extrémité ouverte du boîtier (120), et
dans lequel un ou plusieurs blocs de butée (250) sont prévus entre le couvercle de boîtier (221) et la plaque supérieure (230) de manière à limiter le mouvement de la 20 plaque supérieure (230) dans une direction vers le haut.

2. Module de batterie (100) selon la revendication 1, dans lequel une pluralité de ressorts à force constante (140) sont situés à deux points ou plus qui sont symétriques les uns par rapport aux autres par rapport à une direction d'empilement de 25 l'empilement de cellules de batterie (110).

3. Module de batterie (200) selon la revendication 1, dans lequel un patin de compression (260) est formé à chacune d'une extrémité inférieure et d'une extrémité supérieure de l'empilement de cellules de batterie (210). 30

4. Module de batterie (100) selon la revendication 1, dans lequel m piles de cellules de batterie (110) sont fournies,
dans lequel m est un nombre entier supérieur ou égal à 2, et
dans lequel un patin de compression (160) est formé entre des empilements de cellules 5 de batterie (110) respectifs.

5. Module de batterie (100) selon la revendication 1, dans lequel l'empilement de cellules de batterie (110) comporte en outre un ensemble de barre omnibus (112) reliant électriquement les n cellules de batterie (111). 10

6. Module de batterie (100) selon la revendication 1, dans lequel le boîtier (120) comporte en outre un support ou une partie de montage de ressort pour fixer une région où le ressort à force constante (140) est enroulé sous forme de ressort.

7. Module de batterie (100) selon la revendication 1, dans lequel l'extrémité libre (142) du ressort à force constante (140) comprend un trou de fixation (143) formé dessus, et dans lequel une goupille de fixation, qui pénètre dans le trou de fixation (143), est formée au niveau d'une surface latérale de la plaque supérieure (130).

8. Bloc-batterie, comprenant le module de batterie (100) selon au moins l'une des revendications 1 à 7.
